# EUROPÄISCHE PATENTSCHRIFT

(11) **EP 3 235 669 B1**
(45) Veröffentlichungstag und Bekanntmachung des Hinweises auf die Patenterteilung: **11.07.2018**
(21) Anmeldenummer: 17163756.4
(22) Anmeldetag: 30.03.2017
(51) Int. Cl.: B60J 7/12, B60R 9/04

(54) **FALTVERDECK FÜR KRAFTFAHRZEUGE**
FOLDING TOP FOR MOTOR VEHICLES
TOIT ESCAMOTABLE POUR DES VÉHICULES AUTOMOBILES

(30) Priorität: 08.04.2016 DE 102016205940
(43) Veröffentlichungstag der Anmeldung: 25.10.2017
(73) Patentinhaber: Magna Car Top Systems GmbH, 74321 Bietigheim-Bissingen (DE)
(72) Erfinder: KLEIN, Berthold, 74343 Sachsenheim (DE)
(74) Vertreter: Rausch, Gabriele

(56) Entgegenhaltungen:
- EP-A2- 0 411 280
- EP-A2- 1 595 756
- WO-A2-2007/012325
- DE-A1-102007 032 321

## Beschreibung

### Faltverdeck für Kraftfahrzeuge

Die Erfindung geht aus von einem Faltverdeck für Kraftfahrzeuge, wobei das Faltverdeck zwischen einer einen Fahrgastinnenraum überspannenden Schließstellung und einer in einem Aufbewahrungsraum abgelegten Offenstellung verstellbar ist, umfassend eine Vielzahl von quer zur Fahrtrichtung angeordneten Dachspriegeln, wobei die Dachspriegel an eine Dachkinematik angebunden und auf der Fahrzeuginnenraum-Seite des Faltverdeck oder auf der Fahrzeugaußenseite angeordnet sind.

### Stand der Technik

Das aus der EP 1 463 647 B1 bekannte Hardtop-Fahrzeugdach weist drei starre Dachteile auf, wobei das vordere und das hintere Dachteil mithilfe von Relativkinematiken relativ zu dem mittleren Dachteil verschwenkbar sind. Das mittlere Dachteil ist mittels einer Verstellkinematik an der Karosserie angelenkt. In Ablageposition sind sämtliche Dachteile gleichsinnig in einem Dachteilpaket in einem Ablageraum mit Verdeckkastendeckel abgelegt. Dadurch, dass bei dem bekannten Hardtop-Fahrzeugdach eine Schichtung des Dachteilpaketes mit Ablage von vorderem und hinterem Dachteil oberhalb des mittleren Dachteiles vorgenommen wird, kann das mittlere Dachteil während der Bildung des Dachteilpaketes seine Lage beibehalten, wodurch Beeinträchtigungen des Fahrzeuginnenraumes durch die Paketbildung vermieden werden. Dennoch benötigt die gesamte Dachkinematik viel Platz im Fahrzeuginnenraum, so dass die Kopffreiheit der Insassen bei geschlossenem Hardtop-Fahrzeugdach relativ eingeschränkt ist.

Aus der DE 41 00 677 C2 ist ein Fahrzeugdach, bestehend aus zwei Dachteilen bekannt. Das vordere Dachteil kann zwischen einer Schließposition und einer Öffnungsposition verstellt werden. Hierzu ist das vordere Dachteil mittels Viergelenkkinematiken auf Seitenträgern montiert, die in nach oben offene Aufnahmekanäle im hinteren Dachteil verschoben werden können. Die Seitenträger, die Teil der Dachkinematik sind, befinden sich in Schließstellung des Fahrzeugdaches im Fahrzeuginnenraum und beeinträchtigen damit die Kopffreiheit der Insassen.

Aus der DE102005051647B3 ist ein Hardtop Fahrzeugdach bekannt, das in seiner Schließposition mit einer in Fahrzeuglängsrichtung verlaufenden Dachreling versehen ist, wobei die Dachteilkinematik außerhalb des Fahrzeuginnenraums liegt und die Dachreling bildet.

Aus der DE102007045780A1 ist bekannt, dass ein flexibler Verdeckbezug vorhanden ist und scherenartige Verdeckelemente an der Fahrzeugaußenseite des Bezugs angeordnet sind. Stand der Technik Dokument DE 10 2007 032 321 offenbart die Merkmale des Oberbegriffs des unabhängigen Anspruchs 1. Weiterhin sind Oldtimer wie Adler bekannt, die Sturmstangen außen am Verdeck entlang geführt haben, um einen dekorativen Eindruck zu erzeugen.

Der Erfindung liegt der Gedanke zugrunde, die gesamte Dachkinematik zur Verstellung eines Stoffverdecks derart anzuordnen, dass sich die gesamte Dachkinematik, zumindest in Schließposition, außerhalb des Fahrzeuginnenraums befindet und eine Doppelfunktion als Dachreling erfüllt. Die Spriegel des Faltverdecks werden von der Außenseite her geführt. Hierdurch haben die Elemente der gesamten Dachkinematik keinen Kontakt mehr mit dem Passagierbereich, woraus eine erhöhte Kopffreiheit für die Insassen resultiert. Ferner ist die Sicherheit für die Insassen erhöht, da sich bei einem Unfall die Kinematikelemente nicht innerhalb des Fahrzeuginnenraums deformieren, wodurch Verletzungen der Insassen durch sich verformende Kinematikbauteile vermieden werden.

In Ausgestaltung der Erfindung ist vorgesehen, dass die Dachkinematik in Schließposition eine in Fahrzeuglängsrichtung verlaufende Dachreling bildet bzw. Teil einer Dachreling ist. Dabei ist es zur Realisierung des Erfindungsgedankens grundsätzlich ausreichend, wenn der Dachkinematik eine Verbindungsfunktion zukommt, also wenn die Spriegelkinematik zumindest mit einem Dachrelingbauteil, vorzugsweise gelenkig, verbunden ist und dieses Dachrelingbauteil mit einem anderen Spriegel oder mit einem an dem anderen Spriegel gehaltenen Dachrelingbauteil verbindet.

Es ist von Vorteil, wenn zwei parallele, in Fahrzeugquerrichtung beabstandete, Dachrelings in Form von Dachlängsträgern vorgesehen sind. Zwischen den Dachrelings können Dachgepäckträger, insbesondere für Fahrräder und Skiboxen, befestigt werden.

Die erfindungsgemäße Ausgestaltung der Dachteilkinematik als Dachreling hat den Vorteil, dass in Schließposition das Vorhandensein einer Dachteilkinematik nicht auffällt, da sie in der Form der Dachreling aufgeht. Der Dachkinematik kommt somit, je nach Ausgestaltung, nicht nur eine Verstellfunktion für die Spriegel, sondern gleichzeitig eine Trägerfunktion für Dachgepäckträger zu. Mittels der Erfindung ist es möglich, Targa- und Cabriolet-Fahrzeuge mit einer Dachreling, bei gleichzeitiger Vergrösserung des Fahrzeuginnenraums, zu versehen.

Jede Dachreling umfasst einen in Fahrzeuglängsrichtung verlaufenden Längsträger zur Montage von Dachgepäckträgern. Erfindungsgemäß ist vorgesehen, dass dieser Längsträger aus mindestens zwei, insbesondere in Fahrzeuglängsrichtung fluchtenden, Teillängsträgern gebildet ist. Die Verbindung des Längsträgers bzw. der Teillängsträger mit den Spriegeln erfolgt über Lenker, mittels derer die Teillängsträger mit Abstand zum Verdeck gehalten sind. Der Zwischenraum zwischen dem Verdeck und dem Längsträger bzw. den Teillängsträgern erleichtert die Montage etwaiger Dachgepäckträger.

Es ist zweckmäßig, wenn die Kinematik eine Lenkeranordnung, vorzugsweise eine Viergelenkkinematik, umfasst. Die Lenker der Lenkeranordnung sind auf der Außenseite der Spriegel und des Verdecks, vorzugsweise auf der Außenseite zweier benachbarter Spriegel, angelenkt.

### Beschreibung der Erfindung

Die Erfindung wird nachfolgend beispielhaft unter Bezugnahme auf die beigefügte Zeichnung beschrieben.

Es zeigt:
Fig. 1 bis 3 eine schematische Darstellung eines Faltdaches mit außenliegender Kinematik im geschlossenen Zustand bis zum geöffneten Zustand bei seitlichen Auflagen,
Fig. 4 bis 6 zeigt eine schematische Darstellung eines Faltdaches mit außenliegender Kinematik im geschlossenen Zustand bis zum geöffneten Zustand ohne seitlichen Auflagen,
Fig. 7 und 8 zeigen die Ausführungsformen mit Dachbox.

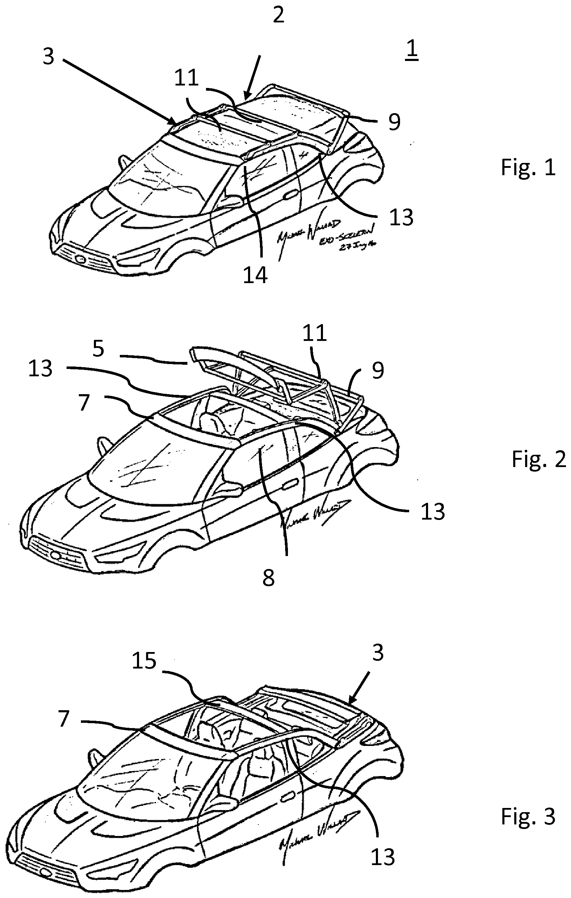

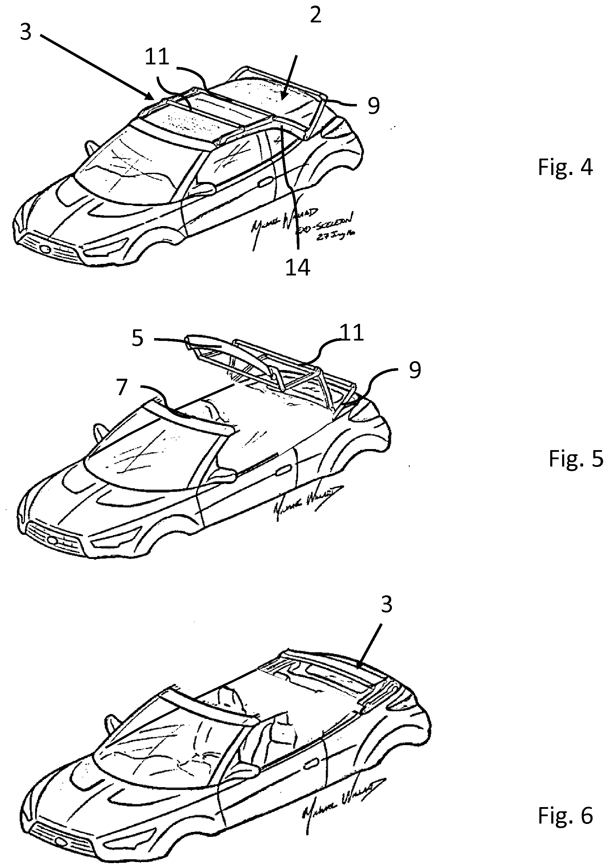

Der Aufbau ist nur schematisch zu erkennen. Ein Fahrzeug 1 ist mit einem Faltverdeck 2 versehen, das mit einem Verdeckstoff 10 ausgestattet ist, der sich zwischen Spriegeln 11 über den Fahrzeuginnenraum 12 erstreckt. Die Spriegel 11 erstrecken sich dabei senkrecht zur Fahrzeuglängsachse A zwischen Fahrzeug-Längsträgern 13 in der Ausführungsform nach Fig. 1 bis 3 oder zwischen den Dachlängsträgern 14 nach Ausführungsform Figur 4 bis 6. Zu erkennen ist eine Dachkinematik 3, die nur skizziert dargestellt ist. Mit dem Begriff Dachkinematik wird die Gesamtheit der Komponenten bezeichnet, die für den Falt- und Bewegungsprozess eines Faltdaches notwendig sind.

Diese Dachkinematik spannt im geschlossenen Zustand Spriegel 11 und Verdeckstoff 10 über das Fahrzeug. Die Dachspitze 5 ist mit dem oberen Teil des Windschutzscheibenrahmens verbunden. Die Dachlängsträger 14 liegen an den Fahrzeuglängsträgern 13 an, die den oberen Abschluss der Fahrzeugseitenscheiben 8 begrenzen. Der Verdeckstoff 10 ist heckseitig entweder fest am Fahrzeug angebunden oder im Normalfall mit einem Spannbügel 9 an der Karosserie befestigt. Alle Lenker und Dachkinematik -Bauteile sind dabei außerhalb des Fahrzeugverdecks angeordnet und von außen sichtbar.

Für die Ausführung der Erfindung ist es auch möglich, dass Teile der Dachkinematik wie Antriebsteile oder Antriebsgestänge sowie Motoren im Fahrgastinnenraum 10 angeordnet sind und Lenker durch den Verdeckstoff geführt werden.

Die Dachkinematik-Bauteile bilden eine Dachreling aus, auf der Dachgepäck zu befestigen ist. In Figur 1 ist dazu zu erkennen, dass zwei der Spriegel 11 oder zwei Querträger 17 zusammen mit einem Teillängsträger 18 des Dachlängsträgers 14 eine nahezu rechteckige Auflage für Gepäck bilden.

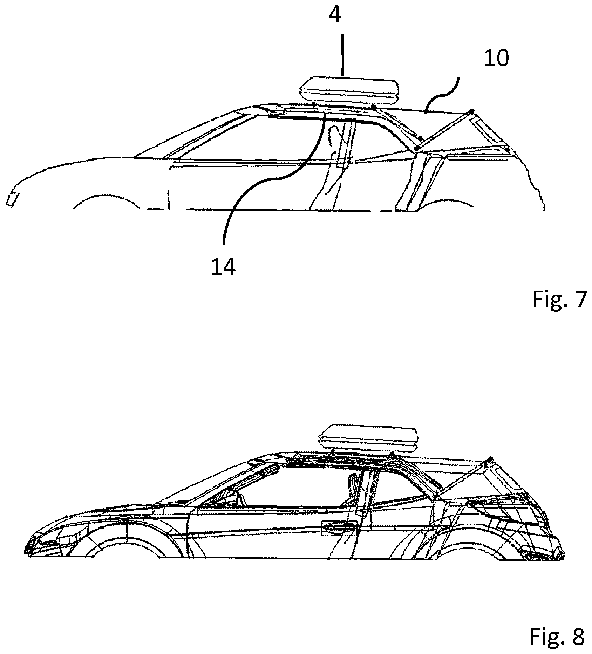

In Figur 7 ist beispielsweise ein Gepäckstück 4 zu erkennen, das auf Querstreben, die auch als Spriegel ausgestaltet sein können, auf der Dachreling angebracht ist.

Es ist auch denkbar, die Spriegel auch nur auf der Innenseite des Verdecks anzubringen und außerhalb separate Querstreben zu verwenden.

### Bezugszeichenliste:

- 1: Fahrzeug
- 2: Faltverdeck
- 3: Dachkinematik
- 4: Gepäckstück
- 5: Dachspitze
- 6: Spannbügel
- 7: oberer Windschutzscheibenrahmen
- 8: Fahrzeugseitenscheiben
- 9: Spannbügel
- 10: Verdeckstoff
- 11: Spriegel
- 12: Fahrgastinnenraum
- 13: Fahrzeug- Längsträger
- 14: Dachlängsträger
- 15: Überrollbügel
- 16: Dachreling
- 17: Querträger
- 18: Teillängsträger

## Patentansprüche

1. Faltverdeck (2) für Kraftfahrzeuge, wobei das Faltverdeck (2) zwischen einer einen Fahrgastinnenraum (12) überspannenden Schließstellung und einer in einem Aufbewahrungsraum abgelegten Offenstellung verstellbar ist, umfassend eine Vielzahl von quer zur Fahrtrichtung angeordneten Dachspriegeln (11), wobei die Dachspriegel an eine Dachkinematik (3) angebunden und auf der Fahrgastinnenraum Seite des Faltverdecks (2) oder auf der Fahrzeugaußenseite angeordnet sind, **dadurch gekennzeichnet, dass** die Dachkinematik-Bauteile (3) zumindest teilweise außerhalb des Fahrgastinnenraums (12) und des Faltverdecks (2) angeordnet sind und als Dachreling (16) für Gepäcktransport dienen.

2. Faltverdeck nach Anspruch 1 **dadurch gekennzeichnet, dass** die Dachreling (16) in Schließposition mindestens einen in Fahrzeuglängsrichtung (A) verlaufenden, mindestens zwei Teillängsträger (18) aufweisende Dachlängsträger (14) umfasst.

3. Faltverdeck nach einem der vorhergehenden Ansprüche, **dadurch gekennzeichnet, dass** die Dachteilkinematik (3) eine Lenkeranordnung umfasst.

4. Faltverdeck nach Anspruch 3 **dadurch gekennzeichnet, dass** die Dachkinematik (3) eine Viergelenkkinematik umfasst.

5. Faltverdeck nach einem der vorhergehenden Ansprüche, **dadurch gekennzeichnet, dass** das Fahrzeug (1) zwei in Querrichtung beabstandete, längsseitliche Dachlängsträger (14) als Dachrelings aufweist.

## Claims

1. Folding top (2) for motor vehicles, wherein the folding top (2) is adjustable between a closed position spanning a passenger compartment (12) and an open position deposited in a storage space, comprising a multiplicity of roof bows (11) arranged transversely with respect to the direction of travel, wherein the roof bows are attached to a roof kinematic system (3) and are arranged on the passenger compartment side of the folding top (2) or on the outer side of the vehicle, **characterized in that** the roof kinematic system components (3) are at least partially arranged outside the passenger compartment (12) and the folding top (2) and serve as a roof rail (16) for transporting luggage.

2. Folding top according to Claim 1, **characterized in that**, in the closed position, the roof rail (16) comprises at least one roof longitudinal member (14) which runs in the longitudinal direction (A) of the vehicle and has at least two partial longitudinal members (18).

3. Folding top according to either of the preceding claims, **characterized in that** the roof part kinematic system (3) comprises a link arrangement.

4. Folding top according to Claim 3, **characterized in that** the roof kinematic system (3) comprises a four-bar-linkage kinematic system.

5. Folding top according to one of the preceding claims, **characterized in that** the vehicle (1) has two longitudinal-side roof longitudinal members (14), which are spaced apart in the transverse direction, as roof rails.

## Revendications

1. Toit escamotable (2) pour des véhicules automobiles, le toit escamotable (2) pouvant être déplacé entre une position de fermeture couvrant un habitacle de passagers (12) et une position d'ouverture rangée dans un espace de stockage, comprenant une pluralité d'arceaux de toit (11) disposés transversalement à la direction de conduite, les arceaux de toit étant reliés à une cinématique de toit (3) et étant disposés du côté habitacle des passagers du toit escamotable (2) ou du côté extérieur du véhicule, **caractérisé en ce que** les composants de la cinématique du toit (3) sont disposés au moins en partie à l'extérieur de l'habitacle de passagers (12) et du toit escamotable (2) et servent de rail de toit (16) pour le transport de bagages.

2. Toit escamotable selon la revendication 1, **caractérisé en ce que** le rail de toit (16), dans la position de fermeture, comprend au moins un longeron de toit (14) s'étendant la direction longitudinale du véhicule (A), présentant au moins deux longerons partiels (18).

3. Toit escamotable selon l'une quelconque des revendications précédentes, **caractérisé en ce que** la cinématique partielle de toit (3) comprend un agencement de bras oscillants.

4. Toit escamotable selon la revendication 3, **caractérisé en ce que** la cinématique de toit (3) comprend une cinématique à quadrilatère articulé.

5. Toit escamotable selon l'une quelconque des revendications précédentes, **caractérisé en ce que** le véhicule (1) présente deux longerons de toit (14) disposés latéralement du côté longitudinal espacés dans la direction transversale, en tant que rails de toit.
